# EUROPÄISCHE PATENTSCHRIFT

(11) **EP 3 653 773 B1**
(45) Veröffentlichungstag und Bekanntmachung des Hinweises auf die Patenterteilung: **19.01.2022**
(21) Anmeldenummer: 19205532.5
(22) Anmeldetag: 28.10.2019
(51) Int. Cl.: D06F 34/18, D06F 34/26, D06F 58/04, D06F 58/36, D06F 58/46, D06F 58/48, D06F 37/06, D06F 103/00, D06F 103/04, D06F 103/10, D06F 103/32, D06F 103/34, D06F 105/12, D06F 105/30, D06F 103/54

(54) **WÄSCHETROCKNER MIT VERBESSERTER STEUERUNG UND VERFAHREN ZU SEINEM BETRIEB**
CLOTHES DRYER WITH IMPROVED CONTROL AND METHOD FOR OPERATING THE SAME
SÈCHE-LINGE À COMMANDE AMÉLIORÉE ET SON PROCÉDÉ DE FONCTIONNEMENT

(30) Priorität: 13.11.2018 DE 102018219349
(43) Veröffentlichungstag der Anmeldung: 20.05.2020
(73) Patentinhaber: BSH Hausgeräte GmbH, 81739 München (DE)
(72) Erfinder: Mielke, Bernd, 13465 Berlin (DE); Stolze, Andreas, 14612 Falkensee (DE)

(56) Entgegenhaltungen:
- EP-A2- 1 321 563
- WO-A1-2018/015214
- DE-A1-102013 100 978
- US-A1- 2015 368 853
- US-A1- 2018 112 349

## Beschreibung

Die Erfindung betrifft einen Wäschetrockner mit einer verbesserten Steuerung und ein Verfahren zu seinem Betrieb. Die Erfindung betrifft insbesondere einen Wäschetrockner mit einer Steuereinrichtung, einer Trommel zur Aufnahme von Wäschestücken, in welcher mindestens ein Wäschemitnehmer angeordnet ist, wobei sich im Wäschemitnehmer eine Sensoranordnung mit mindestens zwei Sensoren, eine autarke Energieversorgung und eine Schnittstelle zur drahtlosen Datenkommunikation befinden, und mindestens einer Auswerteeinheit für Sensorsignale der Sensoranordnung, wobei Steuereinrichtung und Sensoranordnung eingerichtet sind, drahtlos miteinander zu kommunizieren.

Die Entwicklung von Wäschetrocknern ist darauf gerichtet, den Betrieb für einen Benutzer sicherer und einfacher zu gestalten, sowie darin durchgeführte Trocknungsprogramme hinsichtlich Performance, Zeit, Energieverbrauch und Umweltverträglichkeit stetig zu verbessern. Die Möglichkeit, betriebsrelevante Parameter jederzeit bestimmen zu können, ist hierzu unerlässlich.

Im Allgemeinen werden in Wäschetrocknern hierzu Sensoren eingesetzt, zum Beispiel resistiv oder kapazitiv arbeitende Sensoren, welche über eine Widerstandsmessung etwa die Bestimmung einer Restfeuchte in Wäschestücken erlauben oder über eine Messung der Temperatur und/oder der Feuchte einer zum Trocknen verwendeten Prozessluft Rückschlüsse auf den Ablauf eines Trocknungsprogrammes erlauben, so dass beispielsweise ein Programmende angezeigt werden kann. Auch der Einsatz von Drucksensoren oder Beschleunigungssensoren ist bereits bekannt, um beispielsweise eine Beladungsmenge zu bestimmen. Nachteilig ist, dass solche Sensoren meist an unterschiedlichen Stellen im Wäschetrockner platziert sind, so dass eine hohe Ungenauigkeit der gemessenen Sensorsignale daraus resultieren kann, dass die Sensoren unterschiedliche Messstellen erfassen. Sensoren benötigen überdies oft viel Bauraum, so dass die Anordnung nicht flexibel gestaltet werden kann und meist ein großer Abstand zwischen dem eigentlichen Messobjekt und den Sensoren entsteht und das Sensorsignal dann entsprechend ungenau ist. Es wäre daher wünschenswert, wenn eine Sensoranordnung auf möglichst kleinem Bauraum realisiert werden könnte.

Die Veröffentlichung DE 10 2012 217 975 A1 beschreibt ein Haushaltsgerät mit einer Steuereinrichtung zum Steuern von Betriebsprozessen des Haushaltsgeräts, und mit einer batterielosen elektronischen Sensoreinheit zum Erfassen zumindest eines Betriebsparameters des Haushaltsgeräts, wobei die Sensoreinheit einen Generator zum Bereitstellen elektrischer Energie für die Sensoreinheit aus nicht-elektrischer Energie sowie einen Sender aufweist, der zum drahtlosen Übertragen eines zumindest einen Betriebsparameter charakterisierenden Funksignals an die Steuereinrichtung ausgebildet ist. Der Generator ist ein thermoelektrischer Generator mit zwei thermischen Kontaktflächen, der zum Bereitstellen der elektrischen Energie aufgrund einer Temperaturdifferenz zwischen den Kontaktflächen ausgebildet ist.

Die Veröffentlichung EP 1 895 043 A1 beschreibt eine Waschmaschine und/oder einen Wäschetrockner, insbesondere für den Haushaltsgebrauch, ausgestattet mit einer rotierenden Trommel zur Aufnahme von zu waschenden und/oder zu trocknenden Wäschestücken, und mit Kontrollmitteln, welche mindestens einen funktionalen Parameter der Maschine messen können, wie die Feuchte der Wäschestücke. Die besagten Messmittel sind mit der Kontrolltafel verbunden, um diese entsprechend der erkannten Messgröße zu betreiben. Die Messmittel umfassen dabei einen Generator für elektrische Energie, welcher direkt mit der rotierenden Trommel assoziiert ist und mit der Kontrolltafel der Maschine drahtlos kommuniziert. Der Generator für elektrische Energie umfasst einen Permanentmagneten, welcher frei in einem Rohr aus nicht-leitendem Material gleitet, wobei auf dessen äußerer Oberfläche wenigstens eine Spule gewunden ist, welche mit einer elektrischen Schalttafel verbunden ist, welche in der Lage ist, ein Spannungssignal zu elaborieren und an die Kontrolltafel der Maschine zu senden.

Die Veröffentlichung EP 1 997 951 A1 beschreibt eine Waschmaschine, umfassend eine rotierende Wäschetrommel mit einer frontalen Zugangsöffnung. Die Waschmaschine umfasst weiterhin ein elektrisches Gerät, angepasst an die Trommel und einen elektrischen Generator, welcher in die Trommel eingebaut ist und die Rotation der Trommel nutzt, um die zum Betreiben des elektrischen Gerätes notwendige elektrische Energie zu erzeugen.

Die Veröffentlichung DE 102 42 144 A1 beschreibt einen Wäschetrockner mit einer sich drehenden Trommel zur Aufnahme von zu trocknender Wäsche, wobei die Trommel eine Sensoreinrichtung aufweist zur Bestimmung eines physikalischen Werts im Inneren der Trommel, und wobei die Sensoreinrichtung signalübertragend mit einer Steuerung des Wäschetrockners verbunden ist, wobei die signalübertragende Verbindung draht- und berührungslos ausgebildet ist.

Die Veröffentlichung WO 2004/022836 A2 beschreibt einen Wäschetrockner mit einer sich drehenden Trommel zur Aufnahme von zu trocknender Wäsche, wobei die Trommel eine Sensoreinrichtung aufweist zur Bestimmung eines physikalischen Werts im Inneren der Trommel, und wobei die Sensoreinrichtung signalübertragend mit einer Steuerung des Wäschetrockners verbunden ist. Dabei ist die signalübertragende Verbindung draht- und berührungslos ausgebildet.

Die Veröffentlichung DE 10 2006 053 274 A1 beschreibt ein Verfahren zum Ermitteln der Ladungsmenge an Wäsche in einem Laderaum mit Luftauslass eines Wäschetrockners, insbesondere eine Abluftwäschetrockners, wobei die absolute Luftfeuchtigkeit im Luftauslass aus dem Laderaum gemessen wird und wobei die Ladungsmenge in dem Laderaum durch Ermittlung des Maximalwertes und/oder des Verlaufes der absoluten Luftfeuchtigkeit im Luftauslass aus dem Laderaum bestimmt wird.

Die Veröffentlichung WO 2013/182402 beschreibt eine Waschmaschine bzw. einen Trockner, umfassend eine Trommel, in welche Wäschestücke eingebracht werden, ein oder mehrere Ablenkteile (baffles), die auf der inneren Oberfläche der Trommel angebracht sind, einen oder mehrere Sensoren, die in der Trommel platziert sind und eine Hauptregeleinheit, welche Wasch- bzw. Trockenoperationen steuert. Dabei ist eine zusätzliche Regeleinheit innerhalb des Ablenkteiles angeordnet, welche die von den Sensoren erhaltenen analogen Signale in digitale Signale umwandelt und diese Signale an die Hauptregeleinheit überträgt. Ein ins Innere der Trommel zeigender Temperatursensor kann auf der Oberfläche des Ablenkteils angeordnet sein. Die zusätzliche Regeleinheit kann die drahtlose Übertragung von Signalen durchführen.

Die Veröffentlichung WO 2018/015214 beschreibt ein Haushaltsgerät mit einer Steuereinrichtung und mindestens einem Sensorknoten umfassend mindestens einen Sensor, mindestens eine Auswerteeinheit, eine autarke Energieversorgung und eine Schnittstelle zur drahtlosen Datenkommunikation, wobei die Steuereinrichtung und der Sensorknoten eingerichtet sind, drahtlos miteinander zu kommunizieren, und wobei der mindestens eine Sensor ein mikromechanischer Sensor ist und der mindestens eine Sensorknoten derart eingerichtet ist, dass er sowohl von der Steuereinrichtung gesteuert werden kann, als auch selbständig mindestens ein Messsignal erfassen, auswerten und an die Steuereinrichtung übermitteln kann.

Die EP 1 321 563 A2 beschreibt eine Wäschebehandlungsvorrichtung, insbesondere einen Trockner, mit einer Trommel, die in einem Gehäuse drehbar angeordnet ist, und einer Messeinrichtung, die zur Erfassung wenigstens eines Parameters der in der Trommel befindlichen Wäsche und/oder des in der Trommel befindlichen Prozessmediums dient, wobei die Messeinrichtung eine Messwerterfassungseinrichtung und eine am Gehäuse angeordnete Leseeinrichtung umfasst. Dabei ist die Messwerterfassungseinrichtung im Mitnehmer integrierbar und hat eine Send- und/oder Empfangseinrichtung, die die Messwerte der Messwerterfassungseinrichtung an die Leseeinrichtung, die eine Send- und/oder eine Empfangseinrichtung hat, drahtlos überträgt.

Die US 2018/112349 A1 beschreibt eine Trocknervorrichtung und eine darin angeordnete Sensorvorrichtung, die auf einem Mitnehmerkörper angeordnet ist, wobei eine Vielzahl von diesen Sensoren auf der anhebenden Oberfläche auf jeder einer Vielzahl von Mitnehmern angeordnet ist.

Vor diesem Hintergrund war es Aufgabe der vorliegenden Erfindung, einen Wäschetrockner mit einer verbesserten Steuerung bereitzustellen. Vorzugsweise soll eine verbesserte Überwachung und Steuerung eines Trocknungsprogrammes ermöglicht werden, wozu insbesondere auch die Feuchte der Wäschestücke und/oder die Beladung der Trommel mit Wäschestücken ermittelbar sein sollte. Außerdem soll ein zum Betrieb dieses Wäschetrockners geeignetes Verfahren bereitgestellt werden.

Die Lösung dieser Aufgabe wird nach dieser Erfindung erreicht durch einen Wäschetrockner sowie ein zum Betrieb dieses Wäschetrockners geeignetes Verfahren mit den Merkmalen der entsprechenden unabhängigen Patentansprüche. Bevorzugte Ausführungsformen des erfindungsgemäßen Wäschetrockners sowie des erfindungsgemäßen Verfahrens sind in den jeweiligen abhängigen Patentansprüchen aufgeführt. Bevorzugten Ausführungsformen des erfindungsgemäßen Wäschetrockners entsprechen bevorzugte Ausführungsformen des erfindungsgemäßen Verfahrens und umgekehrt, auch wenn dies hierin nicht explizit festgestellt ist.

Gegenstand der Erfindung ist somit ein Wäschetrockner mit einer Steuereinrichtung, einer Trommel zur Aufnahme von Wäschestücken, in welcher mindestens ein Wäschemitnehmer angeordnet ist, wobei sich im Wäschemitnehmer eine Sensoranordnung mit mindestens zwei Sensoren, eine autarke Energieversorgungseinheit und eine Schnittstelle zur drahtlosen Datenkommunikation befinden, und mindestens einer Auswerteeinheit für Sensorsignale der Sensoranordnung, wobei Steuereinrichtung und Sensoranordnung eingerichtet sind, drahtlos miteinander zu kommunizieren, und wobei mindestens zwei Sensoren der Sensoranordnung auf dem gleichen Messprinzip basieren und entlang des Wäschemitnehmers angeordnet sind. Der Wäschetrockner kann ein Trockner an sich oder ein Waschtrockner sein, also ein Gerät, welches die Funktionen einer Waschmaschine und eines Wäschetrockners miteinander verbindet.

Wäschemitnehmer sind im Allgemeinen im Wesentlichen parallel zu einer Drehachse der Trommel angeordnet, so dass der Begriff "entlang des Wäschemitnehmers" dahingehend auszulegen ist, dass die Anordnung im Wesentlichen parallel zur Drehachse der Trommel erfolgt ist. Die Sensoren weisen bei dieser Anordnung zumindest in Richtung des Wäschemitnehmers einen Abstand voneinander auf, wobei dieser Abstand im Allgemeinen jeweils ausgehend von Projektionen der Orte des Sensoren auf eine gedachte Achse, die parallel zur Rotationsachse der Trommel verläuft, bestimmt werden. Drei Sensoren entlang des Wäschemitnehmers definieren daher zwei Abstände, nämlich einen ersten Abstand d₁ zwischen einem ersten Sensor und einem zweiten Sensor und einen zweiten Abstand d₂ zwischen dem zweiten Sensor und einem dritten Sensor. Die Abstände d₁ und d₂ können gleich oder verschieden sein. Dies gilt entsprechend für den Fall von vier oder mehr Sensoren für weitere Abstände dₙ (n>2).

Erfindungsgemäß ist das Messprinzip ausgewählt unter den physikalischen Eigenschaften Temperatur, Luftfeuchtigkeit, Druck und/oder Leitfähigkeit, so dass mindestens zwei Sensoren jeweils ein Temperatursensor, Feuchtesensor, Drucksensor, Leitfähigkeitssensor oder eine beliebige Kombination von diesen sind. Beispielsweise können ein Paar Temperatursensoren und ein Paar Feuchtesensoren vorliegen.

In einer bevorzugten Ausführungsform des erfindungsgemäßen Wäschetrockners ist der optional verwendete Temperatursensor ein mikromechanischer Temperatursensor, der aus einem n-leitenden Silizium-Kristall besteht, der in Planar-Technologie hergestellt ist.

In einer weiteren bevorzugten Ausführungsform des Wäschetrockners werden als Leitfähigkeitssensoren mindestens zwei Elektroden verwendet, die auf mindestens einem Wäschemitnehmer angeordnet sind, so dass zwischen diesen die Leitfähigkeit gemessen werden kann. Die beiden Elektroden können auch auf verschiedenen Wäschemitnehmern angeordnet sein. Ist eine gemessene Leitfähigkeit zwischen den Elektroden vergleichsweise gering, kann darauf geschlossen werden, dass sich zwischen ihnen keine feuchten Wäschestücke befinden. In Abhängigkeit von der Anordnung und Zahl der Elektroden kann in Abhängigkeit von entsprechenden Sensorsignalen auf die Beladung der Trommel mit feuchten Wäschestücken geschlossen werden.

Es ist erfindungsgemäß überdies besonders bevorzugt, dass als Sensoren Mehrfachsensoren verwendet werden, die gleichzeitig auf mehreren Messprinzipien basieren. Derartige platzsparende Dual- oder Tripelsensoren sind an sich bekannt.

Die mindestens zwei Sensoren des Wäschetrockners sind vorzugsweise modulare Bauteile mit einer Größe im Bereich von jeweils 2-4 x 2-4 x 0.5-1.5 mm³.

Die Sensoren sind im Allgemeinen als mikromechanische Sensoren ausgebildet. Da mikromechanische Sensoren besonders kleinteilige Elemente sind, d.h. wenig Bauraum benötigen, können zwei oder mehr Sensoren zusammengefasst werden, so dass beispielsweise ein Dualsensor oder ein Tripelsensor entsteht. Hierzu kann der Sensor insbesondere modular aufgebaut sein. Die kleinteilige Ausgestaltung mikromechanischer Sensoren bietet überdies aber noch einen entscheidenden weiteren Vorteil. Werden nämlich mikromechanische Sensoren verwendet, können alle Sensoren Messungen am gleichen Ort durchführen. Die Sensorsignale haben dann alle einen gemeinsamen örtlichen Bezugspunkt. Dadurch können aus einzelnen Sensorsignalen erhaltene Parameter besonders genau miteinander korreliert werden.

Jedenfalls können die Sensoranordnung, umfassend den mindestens einen mikromechanischen Sensor, die Schnittstelle zur drahtlosen Datenkommunikation und die autarke Energieversorgungseinheit sowie ggf. die Auswerteeinheit auf besonders geringem Bauraum realisiert werden.

In einer weiteren bevorzugten Ausführungsform des erfindungsgemäßen Wäschetrockners ist der mindestens eine Sensor, z.B. ein mikromechanischer Sensor, der im Wäschemitnehmer angeordneten Sensoranordnung ein Drucksensor mit einer Membran. Dann kann vorteilhaft ein Druck, den die Wäschestücke beim Kontakt mit dem Wäschemitnehmer auf die Membran ausüben, auf das Druckelement im Drucksensor übertragen werden. Dies ist insbesondere für die Bestimmung einer Beladung der Trommel mit Wäschestücken von Bedeutung. Durch die Drehung der Trommel kollidieren die Wäschestücke mit dem Wäschemitnehmer und erzeugen auf diese Weise einen Druck auf die Wäschemitnehmer, der durch einen Drucksensor erfasst werden kann. Aus der Art und der Höhe eines solchen Messsignals kann dann der Beladungsgrad bestimmt werden.

Ist der mindestens eine Sensor ein Drucksensor, insbesondere ein mikromechanischer Drucksensor, so kann für den Fall, dass der Drucksensor bei ausgeschaltetem Wäschetrockner nach dem Einbringen von Wäschestücken in die Trommel ein Sensorsignal sensiert, die mindestens eine Sensoranordnung das ausgewertete Sensorsignal an die Steuereinrichtung übermitteln und diese veranlassen, den Wäschetrockner einzuschalten.

Die vorliegende Erfindung ermöglicht die Verfolgung eines Trocknungsprogrammes durch Auswertung von Sensorsignalen von Sensoren, die in Richtung der Wäschemitnehmer bzw. in Richtung der Drehachse der Trommel angeordnet sind. Im Allgemeinen tritt bei der Durchführung eines Trocknungsprogrammes für feuchte Wäschestücke die in einem sog. Prozessluftkanal fließende Prozessluft nach ihrem Erhitzen durch eine im Allgemeinen vorhandene Heizvorrichtung des Wäschetrockners von hinten in die Trommel ein. Beim Durchgang durch die Trommel bis zur Vorderseite kühlt sich die ursprünglich sehr warme und trockene Prozessluft ab und nimmt gleichzeitig Feuchtigkeit aus den zu trocknenden Wäschestücken auf. Überdies werden die Wäschestücke aufgrund der Strömung der Prozessluft im Allgemeinen nach vorne in Richtung einer Zugangstür gedrückt. Dabei werden auch die der eintretenden Prozessluft am nächsten liegenden Wäschestücke im Allgemeinen am stärksten getrocknet. Insgesamt wird sich daher in der Trommel in Richtung von deren Drehachse ein Gradient der Temperatur und der Feuchte der Prozessluft ergeben. Für eine verbesserte Steuerung eines Trocknungsprogrammes ist eine möglichst genaue Bestimmung von ortsabhängiger Temperatur und Feuchte der Luft in der Trommel von Bedeutung. Dadurch können insbesondere die Wäschefeuchte und die Beladung der Trommel mit Wäschestücken besser bestimmt werden. Ungleichmäßigkeiten bei der Trocknung können dadurch beispielsweise durch eine geeignete Änderung einer Gebläseleistung, einer Heizleistung sowie einer Trommelrotation ausgeglichen werden. Überdies kann ein gewünschtes Trocknungsende genauer bestimmt werden.

In einer besonders bevorzugten Ausführungsform der Erfindung sind daher mindestens drei Sensoren, vorzugsweise mindestens vier und besonders bevorzugt mindestens sechs Sensoren entlang des mindestens einen Wäschemitnehmers angeordnet. Im Allgemeinen beruhen diese Sensoren auf dem gleichen Messprinzip, um die Veränderung einer Eigenschaft wie z.B. die Luftfeuchte in Richtung der Drehachse bzw. des Wäschemitnehmers möglichst genau verfolgen zu können.

Die hierin diskutierten Sensoren sind an der Oberfläche von mindestens einem Wäschemitnehmer angeordnet. Es kann allerdings vorgesehen sein, einen oder mehrere Sensoren auch im Inneren des oder der Wäschemitnehmer anzuordnen, beispielsweise einen Temperatursensor zur Überwachung der ordnungsgemäßen Funktion von elektronischen Bauteilen.

Neben den in der Trommel in Wäschemitnehmern angeordneten Sensoren können optional zur Ergänzung weitere Sensoren im Prozessluftkanal angeordnet sein, beispielsweise am Trommeleingang und/oder am Trommelausgang. Hierbei können die Sensoren auf verschiedenen Messprinzipien basieren, z.B. Temperatur, Feuchte, Druck, wobei auch Dual- und Tripelsensoren verwendet werden können. Diese außerhalb der Trommel angeordneten Sensoren können zusätzlich zu einer besseren Überwachung eines Trocknungsprogrammes beitragen.

Ein Wäschetrockner ist zudem bevorzugt, bei dem die Steuereinrichtung eingerichtet ist, um anhand der von den Sensoren gemessenen Sensorsignale und/oder der örtlichen Gradienten der Sensorsignale in Richtung des Wäschemitnehmers die Beladung der Trommel mit Wäschestücken und/oder den Trocknungsgrad der Wäschestücke zu bestimmen. Bei einer Anordnung von Sensoren entlang eines Wäschemitnehmers kann bei einer rotierenden Trommel nämlich ermittelt werden, ab welchem Abstand von einer Zugangsöffnung der Trommel sich die Sensorsignale so ändern, dass davon ausgegangen werden kann, dass hier keine Wäschestücke mehr angeordnet sind.

Der Hintergrund hierfür ist, dass es abhängig von der Menge an Wäschestücken in der Trommel, d.h. der Beladung der Trommel, und der Feuchte der Wäschestücke zu unterschiedlichen Befüllungen der Trommel kommen kann. Bei dem bevorzugten Eintritt der Prozessluft an einer Rückwand der Trommel werden die Wäschestücke zu einer Trocknertür gedrückt. Abhängig von der Menge an Wäschestücken in der Trommel kann dann bei diesem Trommeleintritt nur ein vorderer Bereich der Trommel gefüllt sein. Außerdem werden bei dieser bevorzugten Strömungsrichtung der Prozessluft die Wäschestücke am Trommeleintritt rascher getrocknet als am Trommelaustritt. Die Erfindung ermöglicht es, diesen beladungs- und feuchteabhängigen Befüllungsgrad und die Feuchte der Wäschestücke, d.h. deren Trockengrad, in Abhängigkeit von der Trommeltiefe, d.h. in Abhängigkeit von einer Stelle entlang des Wäschemitnehmers, zu erkennen. Der Trocknungszustand der Wäsche und die Beladungsmenge kann so noch präziser ermittelt und ein Trocknungsprogramm daher genauer gestaltet werden.

In einer besonders bevorzugten Ausführungsform des Wäschetrockners ist die Steuereinrichtung eingerichtet, um zur Bestimmung der Beladung der Trommel mit Wäschestücken und/oder des Trocknungsgrades der Wäschestücke die Stärke der in die Trommel gelangenden Luftströmung zu berücksichtigen. Hierbei umfasst die Stärke der Luftströmung sowohl Menge als auch Fließgeschwindigkeit der Prozessluft. Die Stärke der Luftströmung kann über die Leistung eines Gebläses im Trocknungskanal des Wäschetrockners eingestellt werden.

Es ist erfindungsgemäß bevorzugt, dass der Wäschetrockner mindestens zwei Wäschemitnehmer aufweist, in denen sich eine Sensoranordnung mit mindestens zwei Sensoren, eine autarke Energieversorgung und eine Schnittstelle zur drahtlosen Datenkommunikation befinden. Dabei ist es wiederum bevorzugt, dass die Steuereinrichtung des Wäschetrockners eingerichtet ist, um anhand der von den Sensoranordnungen in den mindestens zwei Wäschemitnehmern gemessenen Sensorsignale und/oder der örtlichen Gradienten der Sensorsignale in Richtung des Wäschemitnehmers unter Berücksichtigung der Rotationsgeschwindigkeit der Trommel die Beladung der Trommel mit Wäschestücken zu bestimmen.

Überdies ist ein Wäschetrockner bevorzugt, bei dem die mindestens eine Sensoranordnung eingerichtet ist, um von der Steuereinrichtung gesteuert zu werden und/oder selbstständig mindestens ein Sensorsignal messen, auswerten und an die Steuereinrichtung übermitteln kann.

Im erfindungsgemäßen Wäschetrockner ist vorzugsweise eine drahtlose Kommunikation zwischen der Steuereinrichtung und der mindestens einen Sensoranordnung in beide Richtungen möglich. Es kann also in einer Ausführungsform beispielsweise ein durch die Sensoranordnung selbstständig erfasster und anschließend ausgewerteter Satz von Sensorsignalen an die Steuereinrichtung übermittelt werden. Die Steuereinrichtung kann andererseits aber vorzugsweise auch ein Signal an die Sensoranordnung übermitteln, beispielsweise zur Abfrage eines Sensorsignals. Die Steuereinrichtung ist dabei vorzugsweise eingerichtet, anhand eines von der mindestens einen Sensoranordnung übermittelten Sensorsignals bzw. einer Auswertung davon im Wäschetrockner eine Aktion auszuführen.

"Aktion" bedeutet im Sinne der Erfindung jede Möglichkeit, den erfindungsgemäßen Wäschetrockner zu steuern. Eine Aktion kann also beispielsweise die Durchführung eines Trocknungsprogramms oder auch eines Teilabschnittes eines Trocknungsprogramms sein. Dabei kann ein Trocknungsprogramm im Sinne der Erfindung ein in einem Wäschetrockner werkseitig implementiertes Trocknungsprogramm sein, eine oder mehrere Zusatzoptionen oder auch ein benutzerdefiniertes Trocknungsprogramm. Der Begriff Trocknungsprogramm ist somit erfindungsgemäß breit auszulegen. Des Weiteren kann es sich bei einer Aktion im Sinne der Erfindung aber auch um das bloße Einschalten oder Ausschalten des Wäschetrockners handeln, das Einschalten oder Ausschalten einer Heizung des Wäschetrockners oder eines Prozessluftgebläses oder die Variation von deren Leistung, die Ausgabe einer Anzeige auf einem Bedienelement des Wäschetrockners oder auch ein akustisches Signal für die Ausgabe von Informationen an einen Benutzer.

Jedenfalls ist jede mögliche Art der Steuerung des erfindungsgemäßen Wäschetrockners von dem Begriff "Aktion" umfasst.

Im erfindungsgemäßen Wäschetrockner sind die Steuereinrichtung und die mindestens eine Sensoranordnung eingerichtet, Daten drahtlos zu kommunizieren. Vorzugsweise sind dabei die mindestens eine Sensoranordnung und die Steuereinrichtung und/oder die Auswerteeinheit eingerichtet, um über eine Low-Power-Bluetooth-Verbindung drahtlos miteinander zu kommunizieren. Die Verbindung kann dabei auf alle möglichen Arten realisiert werden, beispielsweise über individuelle Funkschnittstellen oder auch über Schnittstellen in der Auswerteeinheit und der Steuereinrichtung.

Im erfindungsgemäßen Wäschetrockner ist vorgesehen, dass der mindestens eine Wäschemitnehmer eine autarke Energieversorgungseinheit umfasst. Erfindungsgemäß bedeutet der hierin verwendete Begriff "autarke Energieversorgungseinheit", dass die Energieversorgungseinheit eingerichtet ist, selbstständig Energie zu erzeugen, d.h. unabhängig von der Energieversorgung des Wäschetrockners.

Auf diese Weise kann die Sensoranordnung auch dann selbstständig ein Sensorsignal erfassen, auswerten und an die Steuereinrichtung übermitteln, wenn der Wäschetrockner ausgeschaltet ist. Die Art der Energieversorgung ist dabei nicht eingeschränkt. Die Energieversorgung kann aber beispielsweise auch thermoelektrisch, induktiv oder piezoelektrisch erfolgen. Hier ist im Prinzip jede aus dem Stand der Technik bekannte Lösung möglich. In Ergänzung hierzu können auch für eine Energieversorgung Batterien oder Akkumulatoren herangezogen werden.

Umfasst die Energieversorgungseinheit ein Thermopile-Element, so kann das mindestens eine Thermopile-Element in oder an dem Wäschemitnehmer angeordnet sein. In Kontakt mit warmer Wäsche beispielsweise oder auch durch warme Prozessluft kann dann an den beiden Enden des Thermopile-Elements eine Temperaturdifferenz erzeugt werden. Die erzeugte Spannungsdifferenz kann dann an einem Ende abgegriffen werden.

Umfasst die Energieversorgungseinheit ein magnetisches Induktionselement, also beispielsweise eine Spule und einen Magneten, so kann die Spule in einem Wäschemitnehmer angeordnet werden und der Magnet kann am Gehäuse des Wäschetrockners befestigt werden, so dass durch die Trommelbewegung die Spule in einem definierten Abstand an dem Magneten vorbeigeführt werden kann. Der hierdurch erzeugte Induktionsstrom kann dann abgegriffen werden. Zusätzlich kann zur Verstärkung des Wirkungsgrades auch ein Magnetflusssammler verwendet werden, um durch die Öffnung in der Trommel die Magnetfelder an die Spule weiterzuleiten.

In einer alternativen Ausführungsform kann auch der Magnet in dem Wäschemitnehmer angeordnet sein und zwar derart beweglich, dass er bei einer Hoch- und Runterbewegung der Trommel an der benachbarten Spule vorbeistreifen kann. Es kann auch auf diese Weise vorteilhaft die Energieversorgungseinheit vollständig in den Wäscheabnehmer integriert werden.

In einer bevorzugten Ausführungsform der Erfindung umfasst die autarke Energieversorgungseinheit mindestens ein Piezoelement zur Energieerzeugung und ist eingerichtet, um durch mechanische Verformung mindestens eines Piezoelementes elektrische Energie für die Sensoranordnung, die Schnittstelle zur drahtlosen Datenkommunikation und/oder die Auswerteeinheit zu erzeugen.

Damit nutzt die Erfindung vorteilhaft den sogenannten piezoelektrischen Effekt aus, bei dem durch mechanische Deformation elektrische Ladung erzeugt wird.

In einer bevorzugten Ausführungsform des erfindungsgemäßen Haushaltsgeräts ist das optionale mindestens eine Piezoelement ein piezokeramisches Biegeelement.

Die Form des Biegeelementes ist dabei erfindungsgemäß nicht eingeschränkt, es kann jegliche geometrische Form aufweisen. Bevorzugt ist es jedoch, wenn das Biegeelement flächig ausgestaltet ist, besonders bevorzugt in rechteckiger Form. Auch die Größe und die Auslenkung des Biegeelementes sind erfindungsgemäß nicht eingeschränkt. Sie werden im Allgemeinen von der Platzierung des Piezoelementes abhängen, sowie von der auf das Piezoelement ausgeübten mechanischen Belastung.

Jedenfalls umfasst ein piezokeramisches Biegeelement im Allgemeinen eine Biegestruktur und Elektroden. Die Biegestruktur kann auf unterschiedliche Arten realisiert werden, also beispielsweise eine Schichtstruktur sein. Die Biegestruktur kann auch eine Kombination aus einer oder zwei piezokeramischen Komponenten sein, die auch mindestens eine Zwischenlage aufweisen können. Die piezokeramischen Komponenten können dabei auch aus einzelnen Schichten und/oder Multischichten bestehen, deren Schichtdicke ebenfalls nicht eingeschränkt ist.

Auch das piezokeramische Material ist erfindungsgemäß nicht eingeschränkt, es kann sich beispielsweise um Bleizirkonattitanat handeln, aber auch jede andere Piezokeramik kann verwendet werden.

In einer bevorzugten Ausführungsform des erfindungsgemäßen Wäschetrockners weist jedenfalls das optional verwendete piezokeramische Biegeelement eine piezokeramische Schicht mit einer Schichtdicke von 100 bis 500 µm auf. Bevorzugt liegt die Schichtdicke im Bereich von 150 bis 250 µm, und ist beispielsweise 200 µm.

Vorzugsweise ist diese Schicht dann als Platte ausgebildet und weist jeweils an der Oberseite und der Unterseite eine Flächenelektrode auf, sowie jeweils eine Kontaktierung und zwei elektrische Anschlüsse.

In einer bevorzugten Ausführungsform des erfindungsgemäßen Wäschetrockners ist das mindestens eine optionale Piezoelement derart im oder am Wäschemitnehmer angeordnet, dass es durch den Aufprall von Wäschestücken auf mindestens einen Wäschemitnehmer während der Rotation der Trommel verformt werden kann. Vorzugsweise ist die Energieversorgungseinheit vollständig in den Wäschemitnehmer integriert, so dass die Sensoranordnung zusammen mit der Energieversorgungseinheit als ein kompaktes modulares Bauteil gefertigt werden kann.

Im Allgemeinen weisen Wäschetrockner auch mindestens eine Anzeigeeinheit auf, welche Informationen in Form von Texten, Bildern und/oder Zeichen, farbig und/oder schwarz-weiß, statisch und/oder animiert anzeigen kann. Vorzugsweise können über die Anzeigeeinheit Informationen und/oder Warnungen an einen Benutzer ausgegeben werden. Ganz besonders bevorzugt ist die Anzeigeeinheit jedoch eine externe Anzeigeeinheit, beispielsweise der Touchscreen eines Smartphones oder TabletPCs.

Der Wäschetrockner umfasst eine Auswerteeinheit für die Auswertung der Sensorsignale. Diese kann in den Wäschemitnehmern oder an einer anderen Stelle im Wäschetrockner angeordnet sein. Art und Ausgestaltung der Auswerteeinheit sind nicht eingeschränkt. Sie kann beispielsweise ein Teil des mindestens einen Sensors sein, also in diesen implementiert sein. Es kann sich aber auch um eine eigenständige Prozessoreinheit handeln. Die Auswerteeinheit ist dabei jedenfalls eingerichtet, Sensorsignale auszuwerten und an die Steuereinrichtung zu übermitteln.

In einer bevorzugten Ausführungsform des erfindungsgemäßen Wäschetrockners sind auch Auswerteroutinen in der Auswerteeinheit hinterlegt und die Auswerteeinheit ist eingerichtet, anhand beispielsweise eines Soll/Ist-Vergleichs und/oder anhand von Kalibrationswerten/-kurven von der oder den Sensoranordnungen gemessene Sensorsignale nicht nur auszuwerten, sondern auch zu bewerten und erst dann an die Steuereinrichtung zu übermitteln, wenn dies der Bewertung nach vorgesehen ist. Also beispielsweise, wenn ein hinterlegter Sollwert durch den Istwert überschritten oder unterschritten wird.

Insbesondere für einen Haushalt mit vernetzten Geräten weist der erfindungsgemäße Wäschetrockner vorzugsweise eine zusätzliche Schnittstelle zur drahtlosen Datenübertragung auf, wobei der Wäschetrockner dann vorzugsweise mittels einer externen Bedieneinheit, beispielsweise einem Smartphone und/oder einem Tablet-PC vorzugsweise über eine App bedient werden kann. Insbesondere bevorzugt ist der erfindungsgemäße Wäschetrockner dann auch in ein Heimnetzwerk mit mindestens einem weiteren Haushaltsgerät integriert.

In einer bevorzugten Ausführungsform des erfindungsgemäßen Haushaltsgeräts weist der Wäschemitnehmer zusätzlich einen Energiespeicher auf. Der Energiespeicher ist erfindungsgemäß nicht eingeschränkt und kann technisch auf jegliche Weise realisiert werden, also beispielsweise ein Akkumulator sein. Der Energiespeicher kann zudem beispielsweise in ein Piezoelement implementiert sein oder auch eigenständig ausgebildet sein. Jedenfalls dient der Energiespeicher dazu, die von der Energieversorgungseinheit erzeugte Energie zu speichern und bei Bedarf die Sensoranordnung und ggf. Auswerteeinheit etc. mit elektrischer Energie zu versorgen.

Gegenstand der Erfindung ist außerdem ein Verfahren zum Betrieb eines Wäschetrockners mit einer Steuereinrichtung, einer Trommel zur Aufnahme von Wäschestücken, in welcher mindestens ein Wäschemitnehmer angeordnet ist, wobei sich im Wäschemitnehmer eine Sensoranordnung mit mindestens zwei Sensoren, eine autarke Energieversorgungseinheit und eine Schnittstelle zur drahtlosen Datenkommunikation befinden, und mindestens einer Auswerteeinheit für Sensorsignale der Sensoranordnung, wobei Steuereinrichtung und Sensoranordnung eingerichtet sind, drahtlos miteinander zu kommunizieren, und mindestens zwei Sensoren der Sensoranordnung auf dem gleichen Messprinzip basieren und entlang des Wäschemitnehmers angeordnet sind, wobei das Verfahren die folgenden Schritte umfasst:
(a) Rotieren der Trommel;
(b) Detektieren von Sensorsignalen der mindestens zwei Sensoren der Sensoranordnung, die auf dem gleichen Messprinzip basieren und entlang des Wäschemitnehmers angeordnet sind; und
(d) Auswerten der Sensorsignale der mindestens zwei Sensoren der Sensoranordnung durch die Auswerteeinheit in Hinblick auf die Beladung der Trommel mit Wäschestücken und/oder den Trocknungsgrad der Wäschestücke und Übermitteln der dabei erhaltenen Auswertungsergebnisse an die Steuereinrichtung.

Die Steuereinrichtung kann dann die erhaltenen Auswertungsergebnisse in geeigneter Form weiter verarbeiten und/oder auf einer in der Regel vorhandenen Anzeigeeinheit einem Benutzer des Wäschetrockners anzeigen. Beispielsweise kann ein Trocknungsprogramm für eine effizientere und/oder gleichmäßigere Trocknung modifiziert werden. Alternativ oder in Ergänzung hierzu kann auch ein Trocknungsende genauer auf der Anzeigeeinheit des Wäschetrockners angezeigt werden.

Im Prozessluftkanal eines Wäschetrockners ist im Allgemeinen ein Gebläse zur Beförderung der Prozessluft vorhanden. In einer bevorzugten Ausführungsform des erfindungsgemäßen Verfahrens ist daher in einem Prozessluftkanal des Wäschetrockners ein Gebläse angeordnet und es wird der folgende Schritt (c) vor dem Schritt (d) durchgeführt:
(c) Messen der Stärke der in die Trommel gelangenden Luftströmung und Berücksichtigung der Stärke der gemessenen Luftströmung bei der Auswertung im darauf folgenden Schritt (d).

Beim erfindungsgemäßen Verfahren kann Schritt (b) vorzugsweise sowohl durch die Steuereinrichtung initiiert werden als auch selbständig durch die Sensoranordnung erfolgen, ohne Initiation durch die Steuereinrichtung. Die Steuereinrichtung kann also beispielsweise ein Signal zur Erfassung von Sensorsignalen an die mindestens eine Sensoranordnung übermitteln und dadurch Schritt (b) des erfindungsgemäßen Verfahrens einleiten. Es kann aber beispielsweise auch in der Auswerteeinheit eine Routine hinterlegt sein, selbständig eine Messung zu initiieren und dadurch Schritt (b) des erfindungsgemäßen Verfahrens einzuleiten.

Die Erfindung hat zahlreiche Vorteile. Durch die ortsabhängige Messung verschiedener physikalischer Eigenschaften in der Trommel eines Wäschetrockners ist es möglich, Trocknungsprogramme noch besser zu optimieren, indem präzise auf den Trockengrad der Wäsche und die Beladungsmenge mit Wäschestücken geschlossen werden kann. Diese Informationen können überdies auf bequeme Weise, nämlich drahtlos aus der Trommel heraus übermittelt werden. In Ausführungsformen der Erfindung kann durch die Verwendung mikromechanischer Sensoren eine Sensoranordnung besonders flexibel und platzsparend ausgelegt werden. Eine Vielzahl unterschiedlicher Sensortypen können dabei in variabler Anzahl in die Sensoranordnung implementiert werden. Besonders vorteilhaft ist zudem, dass durch die kleinteilige Bauweise mikromechanischer Sensoren alle Messsignale ortsbezogen auf dieselbe Messstelle detektiert werden können. Somit ist eine besonders genaue Korrelation aller Werte möglich. Durch die autarke Energieversorgungseinheit ist zudem keine elektrische oder mechanische Kontaktierung zwischen der Steuereinheit und der Sensoranordnung notwendig. Die Verwendung von Low-Power-Drahtlos-Schnittstellen in Ausführungsformen gewährleistet überdies eine hohe Lebensdauer bei einem optionalen Batteriebetrieb aufgrund des geringen Energieverbrauchs. Durch den geringen Platzbedarf der Sensoranordnung kann diese sehr nah an der wichtigen Messstelle in der Trommel positioniert werden, wodurch die Signalintensität und die Signalgenauigkeit bei der Messung von physikalischen Eigenschaften insbesondere der Prozessluft gesteigert werden können.

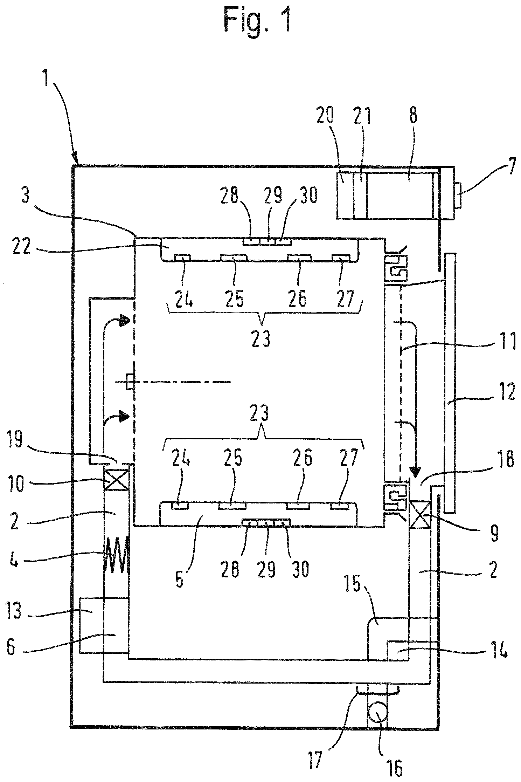

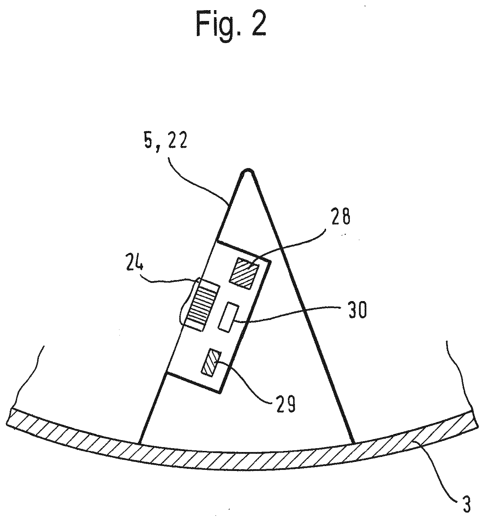

Weitere Einzelheiten der Erfindung ergeben sich aus der nachfolgenden Beschreibung nicht einschränkender Ausführungsformen. Hierbei wird Bezug genommen auf die Figuren 1 und 2.

Figur 1 zeigt einen senkrechten Schnitt durch einen erfindungsgemäßen Wäschetrockner, der als Kondensationstrockner ausgestaltet ist.

Figur 2 zeigt einen Ausschnitt aus einer Trommel, bei dem ein Wäschemitnehmer mit einem darin angeordneten Sensorsystem vergrößert gezeigt ist.

Figur 1 zeigt einen senkrechten Schnitt durch einen erfindungsgemäßen Wäschetrockner, der als Kondensationstrockner ausgestaltet ist, wobei die Pfeile die Fließrichtung der Prozessluft anzeigen. Andere Ausführungsformen sind denkbar.

Der in Figur 1 dargestellte Wäschetrockner 1 weist eine um eine horizontale Achse drehbare Trommel 3 für die Aufnahme von zu trocknenden, hier nicht gezeigten, Wäschestücken, auf, innerhalb welcher Mitnehmer 5,22 zur Bewegung von Wäschestücken während einer Trommeldrehung angebracht sind. Die Prozessluft wird im Prozessluftkanal 2 mittels eines Prozessluftgebläses 6 über einen Luft-Luft-Wärmetauscher 14 und eine elektrische Heizung 4 durch die Trommel 3 geführt. Dabei wird von der elektrischen Heizung 4 erwärmte Luft durch den Trommeleingang 19 von hinten, d.h. von der einer Tür 12 gegenüber liegenden Seite der Trommel 3, durch deren gelochten Boden in die Trommel 3 geleitet.

Nach Austritt aus der Trommel 3 strömt die mit Feuchtigkeit beladene Prozessluft durch die Befüllöffnung der Trommel 3 durch ein Flusensieb 11 innerhalb der die Befüllöffnung verschließenden Tür 12. Anschließend wird der Prozessluftstrom in der Tür 12 nach unten durch den Trommelausgang 18 in den Prozessluftkanal 2 umgelenkt und zum Luft-Luft-Wärmetauscher 14 geleitet, durch den Kühlluft in einem Kühlluftkanal 15 mittels eines Kühlluftgebläses 16 befördert werden kann. Im Luft-Luft-Wärmetauscher 14 kondensiert infolge Abkühlung ein mehr oder weniger großer Teil der von der Prozessluft aus den Wäschestücken aufgenommenen Feuchtigkeit und wird in einer Kondensatwanne 17 aufgefangen.

Die Steuerung des Trockners 1 erfolgt über eine Steuereinrichtung 8, die vom Benutzer über eine Bedieneinheit 7 geregelt werden kann.

In den beiden hier gezeigten Wäschemitnehmern 5,22 des Wäschetrockners 1 befinden sich jeweils eine Sensoranordnung 23 mit jeweils vier Sensoren 24,25,26,27, hier als Tripelsensoren ausgestaltet, eine autarke Energieversorgungseinheit 28, eine Schnittstelle 29 zur drahtlosen Kommunikation sowie eine Auswerteeinheit 30 für Sensorsignale der Sensoranordnung 23, wobei Steuereinrichtung 8 und Sensoranordnung 23 eingerichtet sind, drahtlos miteinander zu kommunizieren. Dabei kann die Kommunikation über die zwischengeschaltete Auswerteeinheit 30 erfolgen. Die Tripelsensoren 24,25,26,27 der Sensoranordnung basieren auf den gleichen Messprinzipien (Temperatur, Druck, Feuchte) und sind entlang der Wäschemitnehmer 5,22 angeordnet.

Bei der hier gezeigten Ausführungsform sind zwei weitere Sensoren am Trommeleingang und am Trommelausgang angeordnet, um für eine noch präzisere Ausgestaltung eines Trocknungsprogrammes weitere Sensorsignale zur Verfügung zu stellen. Zu diesem Zweck sind hier zwei Tripelsensoren 9, 10, nämlich ein Tripelsensor 9 am Trommelausgang 18 und ein Tripelsensor 10 am Trommeleingang 19, mit der Steuereinrichtung 8 verbunden. Die Tripelsensoren können jeweils eine relative Luftfeuchtigkeit, eine Temperatur und den Luftdruck der Prozessluft messen und damit wichtige zusätzlich Sensorsignale liefern, so dass die Restfeuchte der Wäschestücke und insbesondere auch eine Beladung der Trommel 3 mit Wäschestücken noch besser ermittelt werden kann. Hierzu ist im Kondensationstrockner auch eine Zeitmesseinrichtung 20 vorhanden.

Bei der in der Figur 1 gezeigten Ausführungsform werden das Prozessluftgebläse 6 und die Trommel 3 durch den Antriebsmotor 13 angetrieben. Der Antriebsmotor 13 ist bei dieser Ausführungsform ein bürstenloser Gleichstrommotor (BLDC).

Eine Anzeigeeinheit 21 ermöglicht die Anzeige einer Restlaufzeit des Trocknungsprogrammes im Hinblick auf einen vom Benutzer gewählten Restfeuchtewert, beispielsweise bügeltrocken, oder die Anzeige der ermittelten Beladung oder sonstiger Zustände des Wäschetrockners oder die Anzeige des Status des Trocknungsprogrammes, beispielsweise in farblich differenzierter Form.

Fig. 2 zeigt einen Ausschnitt aus einer Trommel, bei dem ein Wäschemitnehmer mit einem darin angeordneten Sensorsystem vergrößert gezeigt ist.

Der Ausschnitt, der insbesondere eine Schnittansicht durch einen Teil einer Trommel des Wäschetrockners 1 von Fig. 1 ist, zeigt einen auf der Trommel angeordneten Wäschemitnehmer 5,22 mit einer Sensoranordnung mit einer autarken Energieversorgungseinheit 28. Von der Sensoranordnung ist bei dieser Schnittansicht nur einer der Sensoren erkennbar, der hier als Tripelsensor 24 (Druck, Temperatur, Feuchte) ausgestaltet ist. Im Wäschemitnehmer 9,22 sind außerdem eine Auswerteeinheit 30 sowie eine Low-Power-Bluetooth-Schnittstelle 29 für die drahtlose Datenübertragung vorhanden.

### BEZUGSZEICHENLISTE

- 1: Trockner
- 2: Prozessluftkanal
- 3: Trommel
- 4: (Elektrische) Heizung
- 5: Erster Mitnehmer
- 6: Prozessluftgebläse, Gebläse
- 7: Bedieneinheit
- 8: Steuereinrichtung
- 9: Sensor für die Messung von Temperatur, relativer Feuchte und/oder Luftdruck am Trommelausgang
- 10: Sensor für die Messung von Temperatur, relativer Feuchte und/oder Luftdruck am Trommeleingang
- 11: Flusensieb
- 12: Tür, Zugangstür zur Trommel
- 13: drehzahlvariabler Antriebsmotor; insbesondere BLDC-Motor
- 14: Wärmetauscher; insbesondere Luft-Luft-Wärmetauscher
- 15: Kühlluftkanal
- 16: Kühlluftgebläse
- 17: Kondensatwanne
- 18: Trommelausgang
- 19: Trommeleingang
- 20: Zeitmessvorrichtung, Uhr
- 21: (Optische) Anzeigeeinheit
- 22: Zweiter Wäschemitnehmer
- 23: Sensoranordnung
- 24: Erster Sensor; Einzel-, Dual- oder Tripelsensor
- 25: Zweiter Sensor; Einzel-, Dual- oder Tripelsensor
- 26: Dritter Sensor; Einzel-, Dual- oder Tripelsensor
- 27: Vierter Sensor; Einzel-, Dual- oder Tripelsensor
- 28: Autarke Energieversorgungseinheit
- 29: Schnittstelle für drahtlose Datenübertragung, Low-Power-Bluetooth-Schnittstelle
- 30: Auswerteeinheit

## Patentansprüche

1. Wäschetrockner (1) mit einer Steuereinrichtung (8), einer Trommel (3) zur Aufnahme von Wäschestücken, in welcher mindestens ein Wäschemitnehmer (5,22) angeordnet ist, wobei sich im Wäschemitnehmer (5,22) eine Sensoranordnung (23) mit mindestens zwei Sensoren (24,25,26,27), eine autarke Energieversorgungseinheit (28), die also eingerichtet ist, selbstständig Energie zu erzeugen, und eine Schnittstelle (29) zur drahtlosen Kommunikation befinden, und mindestens einer Auswerteeinheit (30) für Sensorsignale der Sensoranordnung (23), wobei Steuereinrichtung (8) und Sensoranordnung (23) eingerichtet sind, drahtlos miteinander zu kommunizieren, **dadurch gekennzeichnet, dass** mindestens zwei Sensoren (24,25,26,27) der Sensoranordnung (23) auf dem gleichen Messprinzip basieren und entlang des Wäschemitnehmers (5,22) angeordnet sind, so dass die Anordnung im Wesentlichen parallel zur Drehachse der Trommel (3) erfolgt, und wobei das Messprinzip ausgewählt ist unter den physikalischen Eigenschaften Temperatur, Luftfeuchtigkeit, Druck und/oder Leitfähigkeit, so dass mindestens zwei Sensoren jeweils ein Temperatursensor, Feuchtesensor, Drucksensor, Leitfähigkeitssensor oder eine beliebige Kombination von diesen sind .

2. Wäschetrockner (1) nach Anspruch 1, **dadurch gekennzeichnet, dass** als Leitfähigkeitssensoren mindestens zwei Elektroden verwendet werden, die auf mindestens einem Wäschemitnehmer (5,22) angeordnet sind, so dass zwischen diesen die Leitfähigkeit gemessen werden kann.

3. Wäschetrockner (1) nach einem der Ansprüche 1 bis 2, **dadurch gekennzeichnet, dass** mindestens drei Sensoren (24,25,26,27) entlang des mindestens einen Wäschemitnehmers (5,22) angeordnet sind.

4. Wäschetrockner (1) nach einem der Ansprüche 1 bis 3, **dadurch gekennzeichnet, dass** als Sensoren Mehrfachsensoren verwendet werden, die gleichzeitig auf mehreren Messprinzipien basieren.

5. Wäschetrockner (1) nach einem der Ansprüche 1 bis 4, **dadurch gekennzeichnet, dass** die Steuereinrichtung (8) eingerichtet ist, um anhand der von den Sensoren gemessenen Sensorsignale und/oder der örtlichen Gradienten der Sensorsignale in Richtung des Wäschemitnehmers (5,22) die Beladung der Trommel mit Wäschestücken und/oder den Trocknungsgrad der Wäschestücke zu bestimmen.

6. Wäschetrockner (1) nach Anspruch 5, **dadurch gekennzeichnet, dass** die Steuereinrichtung (8) eingerichtet ist, um zur Bestimmung der Beladung der Trommel mit Wäschestücken und/oder des Trocknungsgrades der Wäschestücke die Stärke der in die Trommel (3) gelangenden Luftströmung zu berücksichtigen.

7. Wäschetrockner (1) nach einem der Ansprüche 1 bis 6, **dadurch gekennzeichnet, dass** er mindestens zwei Wäschemitnehmer (5,22) aufweist, in denen sich eine Sensoranordnung (23) mit mindestens zwei Sensoren (24,25,26,27), eine autarke Energieversorgungseinheit (28) und eine Schnittstelle (29) zur drahtlosen Datenkommunikation befinden.

8. Wäschetrockner (1) nach Anspruch 7, **dadurch gekennzeichnet, dass** die Steuereinrichtung (8) eingerichtet ist, um anhand der von den Sensoranordnungen (23) in den mindestens zwei Wäschemitnehmern (5,22) gemessenen Sensorsignale und/oder der örtlichen Gradienten der Sensorsignale in Richtung des Wäschemitnehmers (5,22) unter Berücksichtigung der Rotationsgeschwindigkeit der Trommel (3) die Beladung der Trommel (3) mit Wäschestücken zu bestimmen.

9. Wäschetrockner (1) nach einem der Ansprüche 1 bis 8, **dadurch gekennzeichnet, dass** die mindestens zwei Sensoren (24,25,26,27) modulare Bauteile mit einer Größe im Bereich von jeweils 2-4 x 2-4 x 0.5-1.5 mm³ sind.

10. Wäschetrockner (1) nach einem der Ansprüche 1 bis 9, **dadurch gekennzeichnet, dass** die mindestens eine Sensoranordnung (23) eingerichtet ist, um von der Steuereinrichtung (8) gesteuert zu werden und/oder selbstständig mindestens ein Sensorsignal messen, auswerten und an die Steuereinrichtung (8) übermitteln kann.

11. Wäschetrockner (1) nach einem der Ansprüche 1 bis 10, **dadurch gekennzeichnet, dass** die mindestens eine Sensoranordnung (23) und die Steuereinrichtung (8) und/oder die Auswerteeinheit (30) eingerichtet sind, um über eine Low-Power-Bluetooth-Verbindung drahtlos miteinander zu kommunizieren.

12. Wäschetrockner (1) nach einem der Ansprüche 1 bis 11, **dadurch gekennzeichnet, dass** die autarke Energieversorgungseinheit (28) mindestens ein Piezoelement zur Energieerzeugung umfasst und eingerichtet ist, um durch mechanische Verformung mindestens eines Piezoelementes Energie für die Sensoranordnung (23), die Schnittstelle (29) zur drahtlosen Datenkommunikation und/oder die Auswerteeinheit (30) zu erzeugen.

13. Verfahren zum Betrieb eines Wäschetrockners (1) mit einer Steuereinrichtung (8), einer Trommel (3) zur Aufnahme von Wäschestücken, in welcher mindestens ein Wäschemitnehmer (5,22) angeordnet ist, wobei sich im Wäschemitnehmer (5,22) eine Sensoranordnung (23) mit mindestens zwei Sensoren (24,25,26,27), eine autarke Energieversorgungseinheit (28), die also eingerichtet ist, selbstständig Energie zu erzeugen, und eine Schnittstelle (29) zur drahtlosen Datenkommunikation befinden, und mindestens einer Auswerteeinheit (30) für Sensorsignale der Sensoranordnung (23), wobei Steuereinrichtung (8) und Sensoranordnung (23) eingerichtet sind, drahtlos miteinander zu kommunizieren, und mindestens zwei Sensoren (24,25,26,27) der Sensoranordnung (23) auf dem gleichen Messprinzip basieren und entlang des Wäschemitnehmers (5,22) angeordnet sind, so dass die Anordnung im Wesentlichen parallel zur Drehachse der Trommel (3) erfolgt, und wobei das Messprinzip ausgewählt ist unter den physikalischen Eigenschaften Temperatur, Luftfeuchtigkeit, Druck und/oder Leitfähigkeit, so dass mindestens zwei Sensoren jeweils ein Temperatursensor, Feuchtesensor, Drucksensor, Leitfähigkeitssensor oder eine beliebige Kombination von diesen sind, wobei das Verfahren die folgenden Schritte umfasst:
(a) Rotieren der Trommel (3);
(b) Detektieren von Sensorsignalen der mindestens zwei Sensoren (24,25,26,27) der Sensoranordnung (23), die auf dem gleichen Messprinzip basieren und entlang des Wäschemitnehmers (5,22) angeordnet sind; und
(d) Auswerten der Sensorsignale der mindestens zwei Sensoren (24,25,26,27) der Sensoranordnung (23) durch die Auswerteeinheit (30) in Hinblick auf die Beladung der Trommel (3) mit Wäschestücken und/oder den Trocknungsgrad der Wäschestücke und Übermitteln der dabei erhaltenen Auswertungsergebnisse an die Steuereinrichtung (8).

14. Verfahren nach Anspruch 13, **dadurch gekennzeichnet, dass** in einem Prozessluftkanal (2) des Wäschetrockners (1) ein Gebläse (6) angeordnet ist und der folgende Schritt (c) vor dem Schritt (d) durchgeführt wird:
(c) Messen der Stärke der in die Trommel (3) gelangenden Luftströmung und Berücksichtigung der Stärke der gemessenen Luftströmung bei der Auswertung im darauf folgenden Schritt (d).

## Claims

1. Tumble dryer (1) with a control facility (8), a drum (3) for accommodating laundry items, in which at least one laundry agitator (5,22) is arranged, wherein a sensor arrangement (23) with at least two sensors (24,25,26,27), an autonomous energy supply unit (28), which is thus configured to generate energy autonomously, and an interface (29) for wireless communication are located in the laundry agitator (5,22), and at least one evaluation unit (30) for sensor signals of the sensor arrangement (23), wherein control facility (8) and sensor arrangement (23) are configured to communicate with one another wirelessly, **characterised in that** at least two sensors (24,25,26,27) of the sensor arrangement (23) are based on the same measuring principle and are arranged along the laundry agitator (5,22), so that the arrangement takes place substantially in parallel with the axis of rotation of the drum (3), and wherein the measuring principle is selected among the physical properties of temperature, humidity, pressure and/or conductivity, so that at least two sensors are in each case a temperature sensor, humidity sensor, pressure sensor, conductivity sensor or any combination thereof.

2. Tumble dryer (1) according to claim 1, **characterised in that** at least two electrodes, which are arranged on at least one laundry agitator (5,22), are used as conductivity sensors, so that the conductivity between them can be measured.

3. Tumble dryer (1) according to one of claims 1 to 2, **characterised in that** at least three sensors (24,25,26,27) are arranged along the at least one laundry agitator (5,22).

4. Tumble dryer (1) according to one of claims 1 to 3, **characterised in that** multiple sensors, which are simultaneously based on a plurality of measuring principles, are used as sensors.

5. Tumble dryer (1) according to one of claims 1 to 4, **characterised in that** the control facility (8) is configured, on the basis of the sensor signals measured by the sensors and/or the spatial gradients of the sensor signals in the direction of the laundry agitator (5,22), to determine the loading of the drum with laundry items and/or the degree of dryness of the laundry items.

6. Tumble dryer (1) according to claim 5, **characterised in that** the control facility (8) is configured, in order to determine the loading of the drum with laundry items and/or the degree of dryness of the laundry items, to take into consideration the strength of the flow of air entering the drum (3).

7. Tumble dryer (1) according to one of claims 1 to 6, **characterised in that** it has at least two laundry agitators (5,22), in which a sensor arrangement (23) with at least two sensors (24,25,26,27), an autonomous energy supply unit (28) and an interface (29) for wireless data communication are located.

8. Tumble dryer (1) according to claim 7, **characterised in that** the control facility (8) is configured, on the basis of the sensor signals measured by the sensor arrangements (23) in the at least two laundry agitators (5,22) and/or the spatial gradients of the sensor signals in the direction of the laundry agitator (5,22), to determine the loading of the drum (3) with laundry items, taking into consideration the rotational speed of the drum (3).

9. Tumble dryer (1) according to one of claims 1 to 8, **characterised in that** the at least two sensors (24,25,26,27) are modular structural parts with a size in the range of 2-4 x 2-4 x 0.5-1.5 mm³ in each case.

10. Tumble dryer (1) according to one of claims 1 to 9, **characterised in that** the at least one sensor arrangement (23) is configured to be controlled by the control facility (8) and/or is autonomously able to measure at least one sensor signal, evaluate it and transmit it to the control facility (8).

11. Tumble dryer (1) according to one of claims 1 to 10, **characterised in that** the at least one sensor arrangement (23) and the control facility (8) and/or the evaluation unit (30) are configured to communicate wirelessly with one another via a low-power Bluetooth connection.

12. Tumble dryer (1) according to one of claims 1 to 11, **characterised in that** the autonomous energy supply unit (28) comprises at least one piezoelement for energy generation and is configured to generate energy for the sensor arrangement (23), the interface (29) for wireless data communication and/or the evaluation unit (30) by mechanical deformation of at least one piezoelement.

13. Method for operating a tumble dryer (1) with a control facility (8), a drum (3) for accommodating laundry items, in which at least one laundry agitator (5,22) is arranged, wherein a sensor arrangement (23) with at least two sensors (24,25,26,27), an autonomous energy supply unit (28), which is thus configured to generate energy autonomously, and an interface (29) for wireless data communication are located in the laundry agitator (5,22), and at least one evaluation unit (30) for sensor signals of the sensor arrangement (23), wherein control facility (8) and sensor arrangement (23) are configured to communicate with one another wirelessly, and at least two sensors (24,25,26,27) of the sensor arrangement (23) are based on the same measuring principle and are arranged along the laundry agitator (5,22), so that the arrangement takes place substantially in parallel with the axis of rotation of the drum (3), and wherein the measuring principle is selected among the physical properties of temperature, humidity, pressure and/or conductivity, so that at least two sensors are in each case a temperature sensor, humidity sensor, pressure sensor, conductivity sensor or any combination thereof, wherein the method comprises the following steps:
(a) rotating the drum (3);
(b) detecting sensor signals of the at least two sensors (24,25,26,27) of the sensor arrangement (23), which are based on the same measuring principle and are arranged along the laundry agitator (5,22); and
(d) evaluating the sensor signals of the at least two sensors (24,25,26,27) of the sensor arrangement (23) by way of the evaluation unit (30) with regard to the loading of the drum (3) with laundry items and/or the degree of dryness of the laundry items and transmitting the evaluation results thereby obtained to the control facility (8).

14. Method according to claim 13, **characterised in that** a fan (6) is arranged in a process air channel (2) of the tumble dryer (1) and the following step (c) is performed before step (d):
(c) measuring the strength of the flow of air entering the drum (3) and taking into consideration the strength of the measured flow of air during the evaluation in the following step (d).

## Revendications

1. Sèche-linge (1) comprenant un dispositif de commande (8), un tambour (3) destiné à recevoir des pièces de linge, dans lequel au moins un entraîneur de linge (5, 22) est disposé, dans lequel dans l'entraîneur de linge (5, 22) se trouvent un agencement de capteurs (23) comprenant au moins deux capteurs (24, 25, 26, 27), une unité autonome d'alimentation en énergie (28), laquelle est donc configurée pour générer de l'énergie de manière autonome, et une interface (29) pour la communication sans fil, et comprenant au moins une unité d'évaluation (30) pour des signaux de capteur de l'agencement de capteurs (23), dans lequel le dispositif de commande (8) et l'agencement de capteurs (23) sont configurés pour communiquer entre eux sans fil, **caractérisé en ce qu'**au moins deux capteurs (24, 25, 26, 27) de l'agencement de capteurs (23) reposent sur le même principe de mesure et sont disposés le long de l'entraîneur de linge (5, 22) de sorte que la disposition est essentiellement réalisée parallèlement à l'axe de rotation du tambour (3), et dans lequel le principe de mesure est sélectionné parmi les caractéristiques physiques température, humidité de l'air, pression et/ou conductibilité, de sorte qu'au moins deux capteurs sont respectivement un capteur de température, un capteur d'humidité, un capteur de pression, un capteur de conductibilité ou une combinaison quelconque de ceux-ci.

2. Sèche-linge (1) selon la revendication 1, **caractérisé en ce qu'**au moins deux électrodes sont utilisées comme capteur de conductibilité, lesquelles sont disposées sur au moins un entraîneur de linge (5, 22) de sorte que la conductibilité peut être mesurée entre celles-ci.

3. Sèche-linge (1) selon l'une quelconque des revendications 1 à 2, **caractérisé en ce qu'**au moins trois capteurs (24, 25, 26, 27) sont disposés le long de l'au moins un entraîneur de linge (5, 22).

4. Sèche-linge (1) selon l'une quelconque des revendications 1 à 3, **caractérisé en ce que** des multicapteurs sont utilisés comme capteurs, lesquels reposent simultanément sur plusieurs principes de mesure.

5. Sèche-linge (1) selon l'une quelconque des revendications 1 à 4, **caractérisé en ce que** le dispositif de commande (8) est configuré afin de déterminer le chargement du tambour avec des pièces de linge et/ou le degré de séchage des pièces de linge à l'aide des signaux de capteur mesurés par les capteurs et/ou des gradients locaux des signaux de capteur en direction de l'entraîneur de linge (5, 22).

6. Sèche-linge (1) selon la revendication 5, **caractérisé en ce que** le dispositif de commande (8) est configuré afin de prendre en compte l'intensité du courant d'air arrivant dans le tambour (3) pour la détermination du chargement du tambour avec des pièces de linge et/ou du degré de séchage des pièces de linge.

7. Sèche-linge (1) selon l'une quelconque des revendications 1 à 6, **caractérisé en ce qu'**il présente au moins deux entraîneurs de linge (5, 22) dans lesquels se trouvent un agencement de capteurs (23) comprenant au moins deux capteurs (24, 25, 26, 27), une unité autonome d'alimentation en énergie (28) et une interface (29) pour la communication de données sans fil.

8. Sèche-linge (1) selon la revendication 7, **caractérisé en ce que** le dispositif de commande (8) est configuré afin de déterminer le chargement du tambour (3) avec des pièces de linge à l'aide des signaux de capteur mesurés par les agencements de capteurs (23) dans les au moins deux entraîneurs de linge (5, 22) et/ou des gradients locaux des signaux de capteur en direction de l'entraîneur de linge (5, 22) en prenant en compte la vitesse de rotation du tambour (3).

9. Sèche-linge (1) selon l'une quelconque des revendications 1 à 8, **caractérisé en ce que** les au moins deux capteurs (24, 25, 26, 27) sont des composants modulaires ayant une taille dans la plage de respectivement 2 - 4 x 2 - 4 x 0,5 x 1,5 mm³.

10. Sèche-linge (1) selon l'une quelconque des revendications 1 à 9, **caractérisé en ce que** l'au moins un agencement de capteurs (23) est configuré pour être commandé par le dispositif de commande (8) et/ou **en ce qu'**il peut mesurer au moins un signal de capteur, l'évaluer et le transmettre au dispositif de commande (8) de manière autonome.

11. Sèche-linge (1) selon l'une quelconque des revendications 1 à 10, **caractérisé en ce que** l'au moins un agencement de capteurs (23) et le dispositif de commande (8) et/ou l'unité d'évaluation (30) sont configurés pour communiquer entre eux sans fil par l'intermédiaire d'une connexion Low Power Bluetooth.

12. Sèche-linge (1) selon l'une quelconque des revendications 1 à 11, **caractérisé en ce que** l'unité autonome d'alimentation en énergie (28) comprend au moins un élément piézoélectrique pour générer l'énergie et est configurée, par déformation mécanique au moins d'un élément piézoélectrique, pour générer de l'énergie pour l'agencement de capteurs (23), pour l'interface (29) destinée à la communication de données sans fils et/ou pour l'unité d'évaluation (30).

13. Procédé de fonctionnement d'un sèche-linge (1) comprenant un dispositif de commande (8), un tambour (3) destiné à recevoir des pièces de linge, dans lequel au moins un entraîneur de linge (5, 22) est disposé, dans lequel dans l'entraîneur de linge (5, 22) se trouvent un agencement de capteurs (23) comprenant au moins deux capteurs (24, 25, 26, 27), une unité autonome d'alimentation en énergie (28), laquelle est donc configurée pour générer de l'énergie de manière autonome, et une interface (29) pour la communication de données sans fil, et comprenant au moins une unité d'évaluation (30) pour des signaux de capteur de l'agencement de capteurs (23), dans lequel le dispositif de commande (8) et l'agencement de capteurs (23) sont configurés pour communiquer entre eux sans fil, et dans lequel au moins deux capteurs (24, 25, 26, 27) de l'agencement de capteurs (23) reposent sur le même principe de mesure et sont disposés le long de l'entraîneur de linge (5, 22) de sorte que la disposition est essentiellement réalisée parallèlement à l'axe de rotation du tambour (3), et dans lequel le principe de mesure est sélectionné parmi les caractéristiques physiques température, humidité de l'air, pression et/ou conductibilité, de sorte qu'au moins deux capteurs sont respectivement un capteur de température, un capteur d'humidité, un capteur de pression, un capteur de conductibilité ou une combinaison quelconque de ceux-ci, dans lequel le procédé comprend les étapes suivantes :
(a) rotation du tambour (3),
(b) détection de signaux de capteur des au moins deux capteurs (24, 25, 26, 27) de l'agencement de capteurs (23), lesquels reposent sur le même principe de mesure et sont disposés le long de l'entraîneur de linge (5, 22) ; et
(d) évaluation des signaux de capteur des au moins deux capteurs (24, 25, 26, 27) de l'agencement de capteurs (23) par l'unité d'évaluation (30) au regard du chargement du tambour (3) avec des pièces de linge et/ou du degré de séchage des pièces de linge, et transmission au dispositif de commande (8) des résultats d'évaluation ainsi obtenus.

14. Procédé selon la revendication 13, **caractérisé en ce qu'**un ventilateur (6) est disposé dans un canal d'air de processus (2) du sèche-linge (1), et **en ce que** l'étape suivante (c) est réalisée avant l'étape (d) :
(c) mesure de l'intensité du courant d'air arrivant dans le tambour (3) et prise en compte de l'intensité du courant d'air mesuré lors de l'évaluation à l'étape successive (d).
